# EUROPEAN PATENT APPLICATION

(11) **EP 0 945 169 A2**
(43) Date of publication of application: **29.09.1999**
(21) Application number: 99105967.6
(22) Date of filing: 24.03.1999
(51) Int. Cl.: B01F 5/04, B01F 3/04

(54) **Apparatus for sparging gases into a liquid fluid flow**

(30) Priority: 26.03.1998 US 48470
(71) Applicant: PRAXAIR TECHNOLOGY, INC., Danbury, CT 06810-5113 (US)
(72) Inventor: Traeder, Terry Jay, Aurora, Illinois 60504 (US); Minzenberger, Richard A., New Lennox, Illinois 60451 (US)
(74) Representative: Schwan, Gerhard, Dipl.-Ing.

(57) **Abstract**

A sparger includes first (52) and second (58) conduits. The second conduit (58) is in fluid communication with the first conduit (52) and intersects the latter at a predetermined angle. A third conduit (64) is disposed in at least one of the first (52) and second (58) conduits, has an inner diameter (66) that is less than the inner diameters of the first and second conduits, and terminates in a closed axial end (68). At least one porous element (72) is connected to the third conduit (64) adjacent to the closed end (68), forms a portion of an outer wall of the third conduit, effects fluid communication between the third conduit (64) and the at least one of the first (52) and second (58) conduits, and is disposed axially beyond the intersection of the first and second conduits by a predetermined distance. The third conduit (64) has a substantially constant inner diameter (66) along its length and at least one radially extending throughbore (84) adjacent to the closed end (68).

## Description

### BACKGROUND OF THE INVENTION

### Field of the Invention

The present invention relates to an apparatus for sparging gases into a liquid flow. More specifically, the present invention is directed towards an apparatus for sparging carbon dioxide into liquid dairy products (e.g., milk) to extend the shelf life of the dairy product.

### Discussion of the Related Art

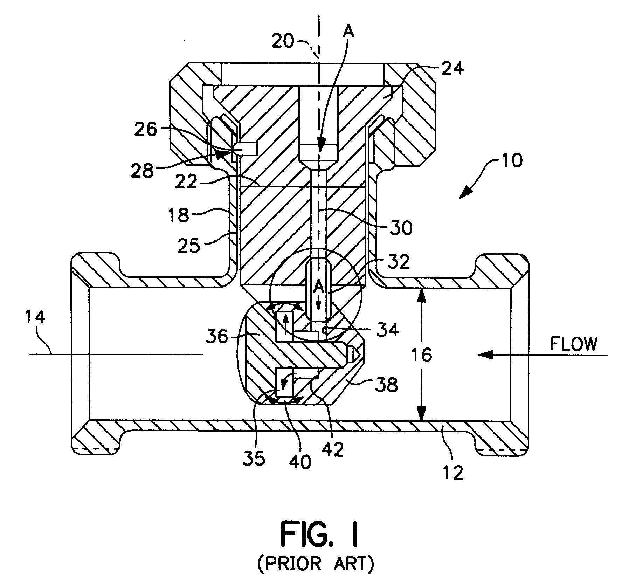

Prior art devices for sparging gases into a liquid flow were principally directed to fluids, such as, edible oils, wine and carbonated beverages. The sanitary standards for these types of fluids permit the simple changing of the porous sparging element on a routine basis. A prior art sparger 10 for these types of fluids is illustrated in Figure 1. Sparger 10 includes a first conduit 12 having a longitudinal axis 14 and an inner diameter 16. A second conduit 18 has a longitudinal axis 20 and an inner diameter 22. Second conduit 18 is in fluid communication with first conduit 12. As illustrated in Figure 1, conduit 18 is disposed at a 90° angle with respect to conduit 12, thereby forming a T-fitting.

A plug 24 is disposed within conduit 18. Plug 24 has an outer diameter that is approximately 97% of the inner diameter of conduit 18. Thus, there is a minimal annular gap 25 disposed between the outer diameter of plug 24 and the inner diameter of conduit 18. An alignment pin 26 is fixedly connected to plug 24. Alignment pin 26 is received within a slot 28 disposed in an inner cylindrical wall of conduit 18, thereby ensuring proper alignment of the sparger with respect to conduit 12. The narrow gap 25 between the outer cylindrical surface of plug 24 and the inner cylindrical surface of conduit 18 and slot 28 provide entrapment zones that detract from the sanitary applications of sparger 10.

A first axial end of a tube 32 is fixedly connected to plug 24 at a first distal end therefor. Tube 32 has its other axial end fixedly connected to a female threaded plug 38. A male threaded screw 36 is fixedly connected to female threaded plug 38. An annular porous element 40 is connected to both the male screw 36 and the female plug 38. The female element 38 includes a blind bore 42 which is in fluid communication with tube 32 via a radially extending bore 34.

Blind bore 42 is in fluid communication with a radially extending gap 35 disposed between axially facing surfaces of male screw 36 and the female plug 38. Thus, gas can be driven into the fluid flow within conduit 12 by passing first through passage 30 in the direction indicated by arrow A, through tube 32, annularly about the shaft portion of plug 36 and then radially outwardly through gap 35 and through porous element 40 into second conduit 12.

As illustrated in Figure 1, sparger element 40 is disposed directly below conduit 18. Thus, at least a portion of gas passing through porous element 40 is likely to enter into the gap 25 between plug 24 and conduit 18 and, thereafter, into slot 28.

Slot 28, relatively narrow gap 25 and the other angles and connections of the prior art sparger provide entrapment zones for food and/or other materials. Additionally, liquid tends to be trapped in slot 28 and gap 25 due to capillary action, even when the conduits are drained of fluid.

The prior art spargers are not intended to be used to introduce a gas into dairy products, such as milk and, therefore, fail to meet the relatively strict sanitary standards of the U.S.D.A. and the 3A trade association for dairy products. The dairy industry typically requires a sterile clean-in-place run to take place between runs of a dairy product. However, porous elements typically fail to meet these clean-in-place standards. Thus, the standards permit replacement of the porous parts with new sterile parts before a new run of product flow is to take place through the main conduit.

Therefore, it is among the object of the invention to provide a device for sparging gases, such as carbon dioxide, into milk or other dairy flow streams, in which the device can be readily removed before a clean-in-place cycle, is self-draining and is so designed as to avoid the entrapment of materials therein.

Other objects and advantages of the invention will be apparent from the following description of preferred embodiments, taken in connection with the accompanying drawings.

### SUMMARY OF THE INVENTION

In accordance with a preferred embodiment demonstrating further features, objects, and advantages of the present invention, a sparger includes a first conduit having a longitudinal axis and an inner diameter. A second conduit has a longitudinal axis and an inner diameter. The second conduit is in fluid communication with the first conduit. The second conduit intersects the first conduit at a predetermined angle. A third conduit is disposed in at least one of the first and second conduits. The third conduit has an inner diameter that is less than the inner diameter of the first conduit and the inner diameter of the second conduit. The third conduit terminates in a closed first axial end. At least one porous element is connected to the third conduit adjacent to the closed first axial end thereby forming a portion of an outer wall of the third conduit. The porous element is designed to distribute ("sparge") gas fed through the third conduit into a liquid stream flowing through the first or second conduit.

The foregoing design is such that the portion of the third conduit incorporating the porous sparging element and the closed axial end thereof are readily removable from the first and/or second conduit before a clean-in-place cycle. Upon removal of the porous sparging element and its closed axial end, a conventional blank cap can be used to close off the third conduit. Thereafter, a new sparger element and closed axial end, which are pre-sterilized, can be inserted into the conduit so that a gas can once again be introduced into the dairy liquid flow.

In connection with a further feature of the preferred embodiments of the invention, the porous sparging element is disposed axially beyond the intersection of the first and second conduits by a predetermined distance so that essentially all of the gas passing through the porous element will be carried away by the liquid product flow and will not travel upstream and be trapped in the second conduit. The sparger design thus prevents back flow of the gas into the liquid stream and turbulence or channeling associated therewith.

In accordance with further features of the preferred embodiments of the invention, the outer diameter of the third conduit is less than about 0.65 to 1.0 of the inner diameter of the first or second conduit in which it is disposed thereby providing a large gap therebetween so that no entrapment zones are created and facilitating self-draining of the liquid between the conduits. Further, fillets are provided in the mounting of the third conduit to prevent any clogging of materials within the junctures. In this manner, the sparger of the invention complies with the safety and hygienic requirements for dairy installations.

### BRIEF DESCRIPTION OF THE FIGURES

The above and still further objects, features and advantages of the present invention will become apparent upon consideration of the following detailed description of a specific embodiment thereof, especially when taken in conjunction with the accompanying drawings wherein like reference numerals in the various figures are utilized to designate like components, and wherein:
Figure 1 is a cross-sectional view of a sparger according to the prior art;
Figure 2 is a cross-sectional view of an in-line sparger in accordance with the present invention;
Figure 3 is an exploded view of the in-line sparger shown in Figure 2;
Figure 4 is a cross-sectional view of a further embodiment of a sparger in accordance with the present invention installed in a standard Y-fitting; and
Figure 5 is a cross-sectional view of yet a further embodiment of a sparger in accordance with the present invention installed in a standard elbow fitting.

### DETAILED DESCRIPTION OF THE PREFERRED EMBODIMENTS

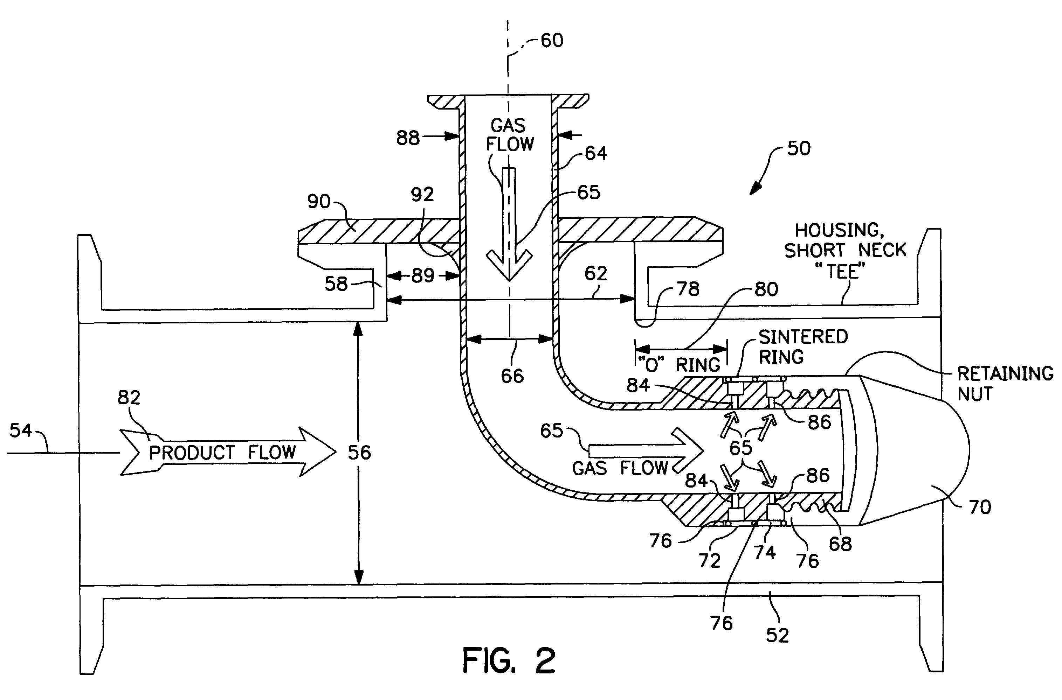

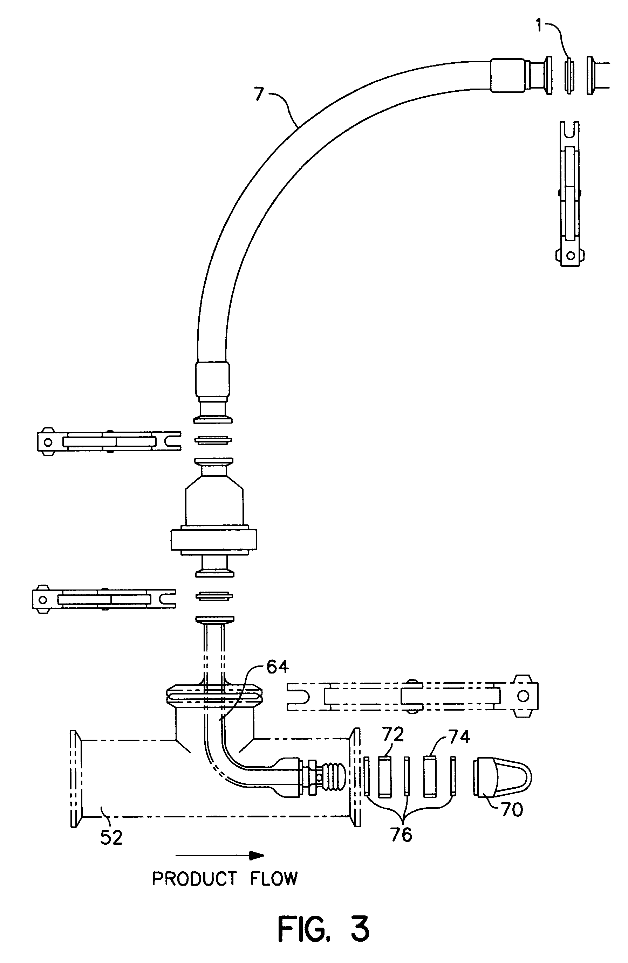

Referring initially to the embodiment illustrated in Figures 2 and 3, a sparger element 50 for introducing a gas, such as carbon dioxide, into a fluid flow stream, such as milk, in accordance with the present invention is illustrated. Sparger 50 includes a first conduit 52 having a longitudinal axis 54 and an inner diameter 56, through which a liquid product stream may flow. A second conduit 58 has a longitudinal axis 60 and an inner diameter 62. The second conduit 58 is in fluid communication with first conduit 52. In the embodiment illustrated in Figure 2, conduit 52 intersects with conduit 58 at a 90° angle.

A third conduit 64 is disposed in second conduit 58 and a portion of first conduit 52 for sparging gas into a liquid stream in conduit 52. Conduit 58 is closed by an end cap 90 that has a central throughbore to receive third conduit 64. The third conduit 64 has an inner diameter 66 that is less than both the inner diameter 56 of the first conduit 52 and the inner diameter 62 of second conduit 58. The third conduit 64 terminates in a closed first axial end, which is generally designated by reference numeral 68. A retaining nut 70 is threadably received on the axial end 68 of third conduit 64. The retaining nut is preferably made of a plastic material and the threaded connection between the retaining nut and the axial end 68 of the third conduit 64 is 5/8" x 8 ACME (i.e., 8 threads per inch) or coarser. A first annular sparging porous element 72 is connected to third conduit 64 adjacent to the closed first axial end 68, thereby forming a portion of an outer wall of the third conduit 64. A second annular sparging porous element 74 is also connected to third conduit 64 axially adjacent to the closed first axial end 68, thereby also forming a portion of the outer wall of the third conduit. Elements 72 and 74 are fixedly connected to third conduit 64. In a currently preferred embodiment, elements 72 and 74 are made of sintered 316 stainless steel. As one of skill in the art would recognize, the porous elements could be made of other 300 series stainless steels, plastic, monel, ceramic and/or a glass material. As one skilled in the art would also readily recognize, a plurality of O-rings 76 are preferably used to form a seal between the porous elements 72 and 74 and the outer wall of third conduit 64.

Conduit 58 intersects conduit 52 at a 90° angle. A downstream intersection in the direction of product flow 82 of conduits 58 and 53 is indicated by reference numeral 78 in Figure 2. Porous element 72 is disposed axially downstream or beyond the intersection limit 78 by a predetermined distance 80. In a currently preferred embodiment, this predetermined distance 80 is at least 1/4" for an inner diameter 56 of 1 3/8". Thus, the gas flow 65 passing through the third conduit 64, which is emitted through porous element 72 (in the form of a plurality of very small bubbles) into conduit 52 is essentially completely carried away by the milk or other dairy product in the direction indicated by arrow 82. Consequently, gas passing through porous element 72 is prevented from traveling upstream and entering conduit 58.

The product flow is preferably approximately 4 feet per second, or higher. For dairy fluids, product flow could be as high as 10 feet per second. But even at the relatively low speed of 4 feet per second, gas bubbles are unlikely to enter into conduit 58, thereby increasing the cleanliness of the sparger 50 in accordance with the present invention. Of course, predetermined distance 80 will vary depending on the fluid flow rates, the viscosities of the respective fluid streams, the size of the conduits, etc., as one skilled in the art will readily recognize. However, the predetermined distance is preferably at least 10% of the inner diameter 56 of first conduit 52.

As illustrated in Figure 2, the inner diameter 66 of the third conduit 64 is substantially constant along the entire length of third conduit 64. A radially extending first throughbore 84 is disposed in third conduit 64 adjacent to the closed axial end 70. Throughbore 84 can simply be a diametrically extending drill hole through third conduit 64. A second radial extending throughbore 86 can similarly be drilled through third conduit 64. This structural arrangement provides, with all other factors being equal, 15% increased gas flow to the product flow in first conduit 52 as compared to the prior art illustrated in Figure 1. Thus, third conduit 64 fluidly communicates via throughbores 84, 86 and through porous elements 72, 74, respectively, with first conduit 52.

Third conduit 64 has an outer diameter 88. The ratio of outer diameter 88 of the third conduit 64 to the inner diameter 62 of the second conduit 58 is less than about 0.65 to 1.0, and preferably less than about 0.50 to about 1.0. In one exemplary embodiment, the outer diameter 88 is 1/2" and the inner diameter 62 is 1 3/8" corresponding to a ratio of about 36%. Thus, there is a rather large gap 89 between the outer cylindrical wall of third conduit 64 and the inner cylindrical wall of second conduit 58 so that no entrapment zones will be created by sparger 50 and the sparger will be self-draining (i.e., essentially no liquid will remain within the conduits due to capillary action). Additionally, the juncture between third conduit 64 and end cap 90 is formed by a radiused fillet 92 that has a radius of at least a 1/4". Additionally, all internal surfaces are preferably polished smooth to a 180 grip silicon carbide paper polish finish, which is equivalent to about 32µ rms (root mean square) or better.

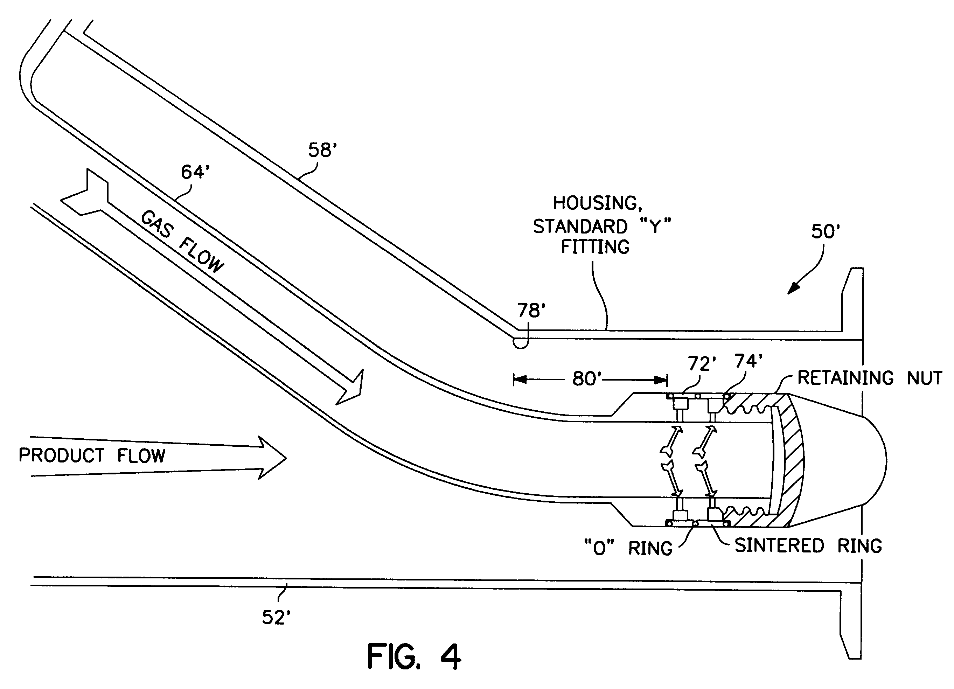

Referring now to Figure 4, an alternate embodiment of the sparger 50' is illustrated, in accordance with the present invention installed in a Y-fitting. In accordance with this embodiment, the second conduit 58' is disposed at an approximately 30° angle with respect to the first conduit 52'. Other than the fact that the third conduit 64' is mounted in a Y fitting, the operation of the sparger 50' is identical to that of sparger 50, and, therefore, for the sake of brevity, will not be repeated. For example, porous element 72' is disposed downstream from intersection limit 78' by a predetermined distance 80' so that the gas bubbles entering first conduit 52' from porous element 72' will not travel upstream and enter into second conduit 58' thereby being trapped in second conduit 58' and being a potential source of contamination.

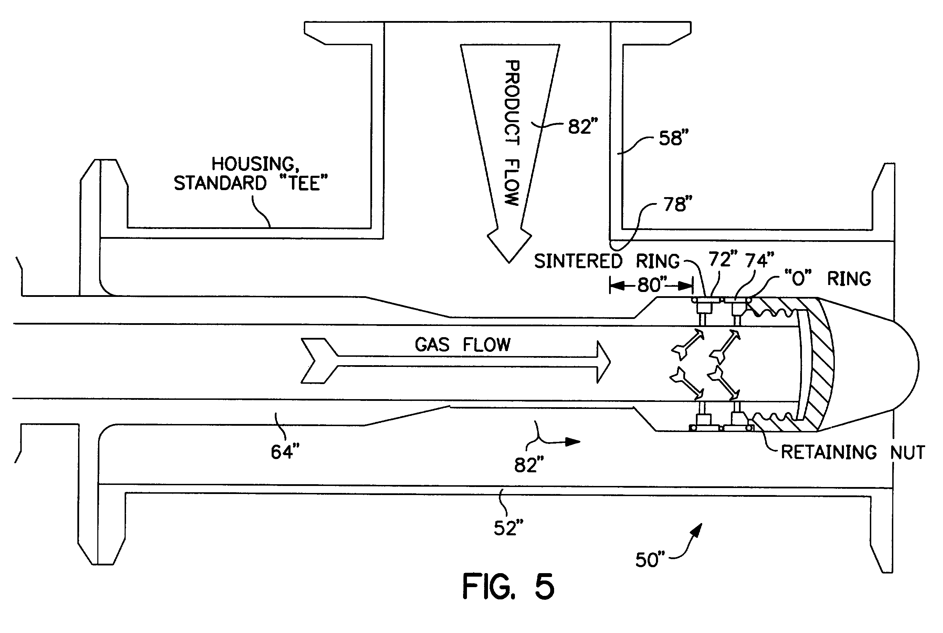

Referring now to Figure 5, a sparger 50" is illustrated, in accordance with the present invention, installed in an elbow fitting. In accordance with this embodiment, the product flow enters from second conduit 58" and bends at a 90° angle into first conduit 52". The third conduit 64" is disposed solely in first conduit 52". However, the remaining operation of the device is similar to the other embodiments illustrated in Figures 2-4 above. For example, porous element 72" is disposed axially downstream from the intersection limit 78" by a predetermined distance 80" so that gas bubbles entering first conduit 52" from porous elements 72", 74" will not travel upstream and enter into second conduit 58" thereby being trapped in second conduit 58" and being a potential source of contamination. Thus, the remaining description of the operation of sparger 50" will be omitted for the sake of brevity.

Having described the presently preferred exemplary embodiments of an apparatus for introducing gas via a sparger into a liquid that is flowing in a conduit in accordance with the present invention, it is believed that other modifications, variations and changes will be suggested to those skilled in the art in view of the teachings set forth herein. For example, only one porous element may be used. Alternatively, two or more porous elements may be used. It is, therefore, to be understood that all such modifications, variations, and changes are believed to fall within the scope of the present invention as defined by the appended claims.

## Claims

1. A sparger comprising:
a first conduit having a longitudinal axis and an inner diameter;
a second conduit having a longitudinal axis and an inner diameter, said second conduit being in fluid communication with said first conduit, said second conduit intersecting with said first conduit at a predetermined angle;
a third conduit disposed in at least one of said first conduit and said second conduit, said third conduit having an inner diameter that is less than said inner diameter of said first conduit and said inner diameter of said second conduit, said third conduit terminating in a closed first axial end; and
at least one porous element connected to said third conduit adjacent to said closed first axial end thereby forming a portion of an outer wall of said third conduit, said element effecting fluid communication between said third conduit and said at least one of said first conduit and said second conduit, said element being disposed axially beyond said intersection by a predetermined distance to prevent gas sparged from the third conduit through said porous element from flowing upstream into said first or second conduit.

2. The sparger according to claim 1, wherein said at least one porous element is annular in shape.

3. The sparger according to claim 2, wherein said at least one porous element comprises two or more elements in an axial orientation.

4. The sparger according to claim 2, wherein said predetermined angle is about 90°.

5. The sparger according to claim 2, wherein said predetermined angle is about 30°.

6. The sparger according to claim 1, wherein said predetermined distance is at least 10% of the inner diameter of said at least one first conduit and said second conduit.

7. A sparger comprising:
a first conduit having a longitudinal axis and an inner diameter;
a second conduit having a longitudinal axis and an inner diameter, said second conduit being in fluid communication with said first conduit, said second conduit intersecting said first conduit at a predetermined angle;
a third conduit disposed in at least one of said first conduit and said second conduit, said third conduit having a substantially constant inner diameter along its entire length, said third conduit inner diameter being less than said inner diameter of said first conduit and said inner diameter of said second conduit, said third conduit terminating in a closed first axial end, said third conduit having at least one radially extending throughbore adjacent to said closed first axial end; and
at least one porous element connected to said third conduit adjacent to said at least one radially extending throughbore, said at least one element thereby forming a portion of an outer wall of said third conduit, said element effecting fluid communication via said at least one radially extending throughbore between said third conduit and said at least one of said first conduit and said second conduit.

8. A sparger comprising:
a first conduit having a longitudinal axis and an inner diameter;
a second conduit having a longitudinal axis and an inner diameter, said second conduit being in fluid communication with said first conduit, said second conduit intersecting with said first conduit at a predetermined angle;
a third conduit disposed in at least one of said first conduit and said second conduit and terminating in a closed first axial end, wherein said third conduit has an outer diameter that is less than both said inner diameter of said first conduit and said inner diameter of said second conduit, and wherein the ratio of said outer diameter of said third conduit to an inner diameter of said at least one of said first conduit and said second conduit is less than about 0.65;
at least one porous element connected to said third conduit adjacent to said closed first axial end thereby forming a portion of an outer wall of said third conduit, said element effecting fluid communication between said third conduit and said at least one of said first conduit and said second conduit.

9. The sparger according to claim 12, wherein said ratio is less than about 0.50.

10. A sparger comprising:
a first conduit having a longitudinal axis and an inner diameter, a second conduit having a longitudinal axis and an inner diameter, said second conduit being in fluid communication with said first conduit, said second conduit intersecting with said first conduit at a predetermined angle;
a third conduit disposed in at least one of said first conduit and said second conduit and terminating in a closed first axial end, said third conduit having at least one radially extending throughbore adjacent to said closed first axial end, said third conduit having an outer diameter and a substantially constant inner diameter along its entire length, said third conduit's inner diameter being less than both said inner diameter of said first conduit and said inner diameter of said second conduit, and wherein the ratio of said outer diameter of said third conduit to an inner diameter of said at least one of said first conduit and said second conduit is less than about 0.65;
at least one porous element connected to said third conduit adjacent to said at least one radially extending throughbore, said at least one porous element thereby forming a portion of an outer wall of said third conduit, said porous element effecting fluid communication via said at least one radially extending throughbore between said third conduit and said at least one of said first conduit and said second conduit, said porous element being disposed axially beyond said intersection by a predetermined distance to prevent gas sparged from the third conduit through said porous element from flowing upstream into said first or second conduit.
